# FASCICULE DE BREVET EUROPEEN

(11) **EP 3 627 237 B1**
(45) Date de publication et mention de la délivrance du brevet: **06.04.2022**
(21) Numéro de dépôt: 18195593.1
(22) Date de dépôt: 20.09.2018
(51) Int. Cl.: G04B 15/14, G04B 17/32, G04B 15/08

(54) **COMPOSANT EN MATERIAU MICRO-USINABLE POUR RESONATEUR À HAUT FACTEUR DE QUALITÉ**
KOMPONENTE AUS MIKROBEARBEITBAREM MATERIAL FÜR RESONATOR MIT HOHEM QUALITÄTSFAKTOR
COMPONENT MADE OF MICRO-MACHINABLE MATERIAL FOR RESONATOR WITH HIGH QUALITY FACTOR

(43) Date de publication de la demande: 25.03.2020
(73) Titulaire: ETA SA Manufacture Horlogère Suisse, 2540 Grenchen (CH)
(72) Inventeur: HUOT-MARCHAND, Sylvain, 2400 Le Locle (CH)
(74) Mandataire: ICB SA

(56) Documents cités:
- EP-A1- 1 927 649
- EP-A1- 3 315 214
- EP-A1- 3 327 515
- WO-A2-2008/017721

## Description

### Domaine de l'invention

L'invention concerne un composant de résonateur à haut facteur de qualité supérieur à 1000, ou de mécanisme d'échappement d'horlogerie agencé pour coopérer avec un tel résonateur à haut facteur de qualité, ledit composant comportant un noyau en matériau micro-usinable, recouvert d'une couche d'oxyde dudit matériau micro-usinable quand ledit matériau micro-usinable est oxydable, et ledit composant comportant, sur ledit noyau ou sur ladite couche d'oxyde dudit matériau micro-usinable quand ledit matériau micro-usinable est oxydable, une couche résistante à l'abrasion qui comporte au moins une surface de contact agencée pour coopérer avec une surface de contact antagoniste que comporte au moins un autre composant dudit résonateur ou dudit mécanisme d'échappement ou d'un mouvement d'horlogerie incorporant ledit résonateur et/ou ledit mécanisme d'échappement.

L'invention concerne encore un résonateur comportant au moins un tel composant.

L'invention concerne encore un mécanisme d'échappement comportant au moins un tel composant.

L'invention concerne encore un mouvement d'horlogerie comportant un tel résonateur, et/ou un tel mécanisme d'échappement.

L'invention concerne encore une montre comportant, dans une boîte étanche, au moins un tel mouvement.

L'invention concerne le domaine des pièces d'horlogerie, notamment des montres, comportant des résonateurs à haut facteur de qualité, réalisés avec des composants en matériaux micro-usinables, et dont les guidages à lames élastiques sont agencés pour apporter de bonnes caractéristiques d'isochronisme dans toutes les positions dans le champ de gravité.

### Arrière-plan de l'invention

La plupart des montres mécaniques traditionnelles sont munies d'un oscillateur à balancier-spiral et d'un mécanisme d'échappement à ancre suisse. Le balancier-spiral constitue la base de temps de la montre. On l'appelle aussi résonateur. L'échappement, quant à lui, remplit deux fonctions principales:
- entretenir les va-et-vient du résonateur ;
- compter ces va-et-vient.

En plus de ces deux fonctions principales, l'échappement doit être robuste, résister aux chocs, et éviter de coincer le mouvement (renversement).

Le mécanisme d'échappement à ancre suisse, quoique très fiable, a un rendement énergétique faible, d'environ 30%. Ce faible rendement provient du fait que les mouvements de l'échappement sont saccadés, qu'il y a des chutes ou chemins perdus pour s'accommoder des erreurs d'usinage, et, aussi du fait que plusieurs composants se transmettent leur mouvement via des plans inclinés qui frottent les uns par rapport aux autres.

Pour constituer un résonateur mécanique, il faut un élément inertiel, un guidage et un élément de rappel élastique. Traditionnellement, un ressort spiral joue le rôle d'élément de rappel élastique pour l'élément inertiel que constitue un balancier. Ce balancier est guidé en rotation par des pivots qui tournent dans des paliers lisses en rubis. Cela donne lieu à des frottements, et donc à des pertes d'énergie et des perturbations de marche, qui dépendent des positions de la montre dans le champ de gravité, et que l'on cherche à supprimer.

On connaît depuis peu des résonateurs mécaniques constitués d'un élément inertiel et d'au moins deux éléments flexibles qui jouent le double rôle de pivotement autour d'un axe de pivotement virtuel, et de ressort de rappel. Ces nouveaux résonateurs permettent des fréquences d'oscillation plus importantes, de l'ordre de 10 Hz voire 50 Hz ou plus, et des facteurs de qualité bien plus élevés, soit par exemple de l'ordre de 2000, que ceux des résonateurs mécaniques traditionnels avec balancier et spiral, généralement de l'ordre de 280. L'énergie à fournir au résonateur à chaque alternance est donc bien plus faible, par exemple 20 fois plus faible, que celle à fournir avec un résonateur traditionnel de type balancier-spiral.

L'énergie transitant par l'échappement est donc relativement bien plus faible que celle transitant par un échappement à ancre suisse dans le cas d'un résonateur traditionnel de type balancier-spiral. Cela impose l'élaboration de composants d'échappement avec des inerties réduites. Cette caractéristique est atteinte, d'une part en utilisant des matériaux de densité faible comme par exemple le silicium ou le silicium oxydé, ou similaire, et d'autre part en réduisant la taille des composants de l'échappement. Le silicium peut avantageusement être usiné avec les technologies issues de l'électronique comme le « DRIE » ou Deep Reactive Ion Etching, c'est-à-dire gravure ionique réactive profonde, qui permettent une précision adaptée aux contraintes de fonctionnement d'un tel échappement. Le silicium s'oxyde naturellement à l'air, il peut aussi être oxydé volontairement durant le processus de fabrication pour, par exemple, accroître la ténacité des composants, ou en modifier le coefficient thermoélastique, ou encore créer des précontraintes pour des composants multi-stables.

Le document EP3327515A1 au nom de ETA Manufacture Horlogère Suisse décrit un résonateur rotatif à guidage flexible, entretenu par un échappement libre à ancre. Le résonateur de facteur de qualité Q comporte un élément inertiel comportant une cheville coopérant avec une fourchette de l'ancre, soumis au rappel de deux lames flexibles fixées à la platine, définissant un pivot virtuel autour d'un axe principal , l'ancre pivotant autour d'un axe secondaire, et l'angle de levée de résonateur, pendant lequel la cheville est en contact avec la fourchette, est inférieur à 10°, et le rapport I_{B}/I_{A} entre l'inertie I_{B} de l'élément inertiel par rapport à l'axe principal, et l'inertie I_{A} de l'ancre par rapport à l'axe secondaire, est supérieur à 2Q.α²/(0.1.π.β²), α étant l'angle de levée de l'ancre correspondant à la course angulaire maximale de la fourchette. Plus particulièrement, l'ancre, et/ou le mobile d'échappement, et/ou chaque lame flexible, est en silicium, notamment en silicium oxydé en ce qui concerne les lames flexibles.

Le document WO2008/017721 au nom de SURFACTIS Technologies décrit un procédé de recouvrement d'un substrat métallique ou inorganique par une couche de fonctionnalisation moléculaire. Ce procédé comprend les étapes successives suivantes: a) oxydation préalable de la surface du substrat si elle n'est pas déjà au moins partiellement hydroxylée pour disposer des fonctions hydroxyle sur la surface du substrat, b) mise en contact de la surface du substrat avec une composition de revêtement liquide, gazeuse ou supercritique de recouvrement contenant des composés gem-bisphosphoniques, et/ou leurs sels toxicologiquement acceptables, jusqu'à l'auto-assemblage de ces composés gem-bisphosphoniques en une couche recouvrant la surface, c) élimination de la composition de revêtement liquide, gazeuse ou supercritique de recouvrement, d) déshydratation de la surface ainsi recouverte. Il décrit le substrat récupéré pouvant être obtenu à partir de ce procédé, les utilisations de ce substrat fonctionnalisé, les composés gem-bisphosphoniques permettant la mise en œuvre de ce procédé de revêtement, et les utilisations de ces composés gem-bisphosphoniques.

L'oxyde de silicium (silice) est connu pour sa propension à adsorber de l'eau. Ce caractère hygroscopique est d'ailleurs utilisé pour assécher l'air de certains conditionnements pour éviter que la marchandise qu'ils renferment ne soit altérée par l'humidité, par exemple sous forme de sachets de silica-gel.

Dans le cas de mécanismes transmettant des énergies très faibles, des phénomènes d'adhésion peuvent se produire. Ces phénomènes de surface peuvent devenir prépondérants si la taille des composants de l'échappement est faible. Ces effets de surface (frottement et adhésion) deviennent en effet plus importants que les effets de volume (inertie, masse) au fur et à mesure que la dimension des pièces diminue. Il en résulte in fine des collements potentiellement néfastes.

Les essais réalisés démontrent une perte significative de rendement lorsque l'humidité relative augmente. Les forces d'adhésion dépendent des différentes tensions de surface et du volume de liquide, et non de la force appliquée par un composant sur un autre.

De ce fait l'influence de ces collements peut conduire à des arrêts du mouvement, lorsque le couple à l'échappement est faible et que l'humidité est élevée. Il s'ensuit alors des perturbations, et des pertes de réserve de marche.

### Résumé de l'invention

L'invention se propose de réaliser des mécanismes horlogers à haut facteur de qualité, dont les efforts de contact et de décollement en fin de contact soient très peu sensibles aux produits mouillants, et notamment à l'humidité.

A cet effet, l'invention concerne un composant de résonateur d'horlogerie à haut facteur de qualité supérieur, ou de mécanisme d'échappement d'horlogerie agencé pour coopérer avec un tel résonateur à haut facteur de qualité, selon la revendication 1.

L'invention concerne encore un mouvement d'horlogerie comportant un tel mécanisme d'échappement.

L'invention concerne encore un résonateur comportant au moins un tel composant.

L'invention concerne encore un mécanisme d'échappement comportant au moins un tel composant.

L'invention concerne encore un mouvement d'horlogerie comportant un tel résonateur, et/ou un tel mécanisme d'échappement.

L'invention concerne encore une montre comportant, dans une boîte étanche, au moins un tel mouvement.

### Description sommaire des dessins

D'autres caractéristiques et avantages de l'invention apparaîtront à la lecture de la description détaillée qui va suivre, en référence aux dessins annexés, où :
- la figure 1 représente deux exemples de la structure de polyperfluoroethers convenant à la mise en oeuvre de l'invention : un Zdol-TX en haut, et un Z-Tetraol en-dessous ;
- la figure 2 montre une structure en silicium, dont la surface est matérialisée par un trait plein horizontal ; au-delà, s'étend son oxyde SiO₂. La liaison OH de la molécule à déposer (en l'occurrence un Self-Assembled Monolayer ou monocouche auto-assemblée ou SAM dit lubrifiant) est liée à l'atome de silicium en remplacement de la même liaison OH qui s'est développée sur le SiO₂ à l'air ambiant ;
- la figure 3 illustre la formation de groupements OH dans une phase d'hydroxylation à la surface du Si/SiO₂, sur lesquels une molécule avec un ancrage de type silane viendra se greffer lors d'une phase ultérieure de silanisation, le reste de la molécule en NH₂ est donné à titre d'exemple ;

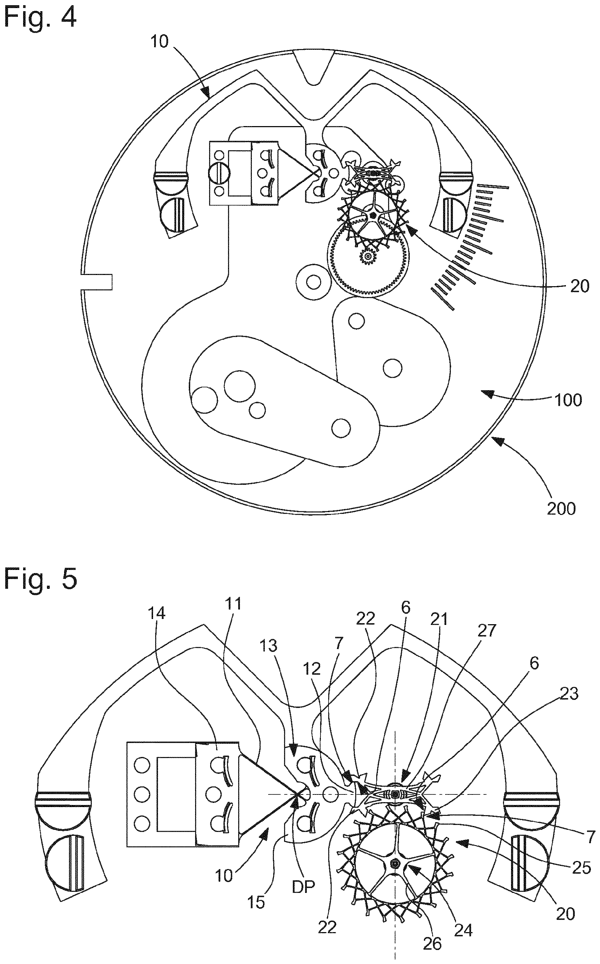

- la figure 4 représente, de façon schématisée et en plan, une montre avec un mouvement comportant un résonateur à haut facteur de qualité, et un mécanisme d'échappement adapté, et dont les composants sont réalisés selon l'invention ;
- la figure 5 est un détail de la figure 4 ;

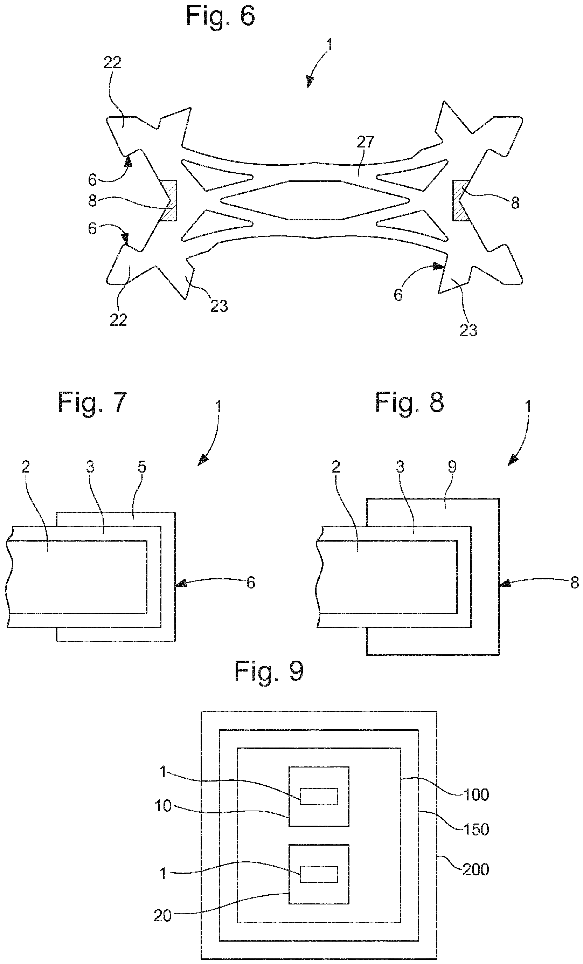

- la figure 6 est un détail de l'ancre du mécanisme des figures 5 et 6, faisant la liaison entre le résonateur et la roue d'échappement ;
- la figure 7 est un schéma en coupe d'un composant selon l'invention avec une couche résistante à l'abrasion hydrophobe, dont la surface est une surface de contact hydrophobe ;
- la figure 8 est un schéma en coupe d'un composant selon l'invention avec une couche résistante à l'abrasion hydrophile, dont la surface est une surface de recueil de condensat ;
- la figure 10 est un schéma-blocs représentant une montre dont la boîte intègre un mouvement avec un résonateur et un mécanisme d'échappement comportant tous deux des composants selon l'invention.

### Description détaillée des modes de réalisation préférés

L'invention est surtout destinée à éviter les phénomènes d'adhésion, dans un mécanisme horloger comportant un résonateur à haut facteur de qualité, notamment supérieur à 1000, comportant des moyens de guidage à pivot virtuel, ou à guidage flexible, ou similaire, et dans lequel l'énergie transférée est beaucoup plus faible que dans un mécanisme, dit ci-après traditionnel, avec résonateur à balancier-spiral et échappement à ancre suisse, et où les efforts de contact sont logiquement très réduits.

Le problème technique est de surmonter les efforts capillaires lors du décollement de deux composants antagonistes, quand le mécanisme tend à séparer ces deux composants antagonistes: si les efforts capillaires sont négligeables devant les autres efforts dans un mécanisme traditionnel, ce n'est plus le cas dans un tel mécanisme avec résonateur à haut facteur de qualité, et l'effort capillaire entrave le décollement des composants.

L'invention se propose d'utiliser un revêtement hydrophobe afin de limiter l'effet des forces capillaires dans un tel mécanisme. La tension de surface d'un liquide est donnée en N/m mais peut être également donnée en J/m2. Donc, plus un liquide mouille une surface importante, plus on doit fournir d'énergie pour en séparer une autre surface en contact. Le fonctionnement de l'échappement comporte de nombreux décollements de composants, et, à chaque fois, de l'énergie est consommée à cause de ces forces capillaires.

En particulier, les composants en silicium, largement utilisés dans de tels mécanismes à résonateur à haut facteur de qualité, possèdent à leur surface un oxyde, naturel ou non, qui est hygroscopique. Un produit mouillant, tel que de l'eau (humidité de l'air), ou un autre liquide, tel que lubrifiant, ou solvant, présent dans la boîte de montre, se dépose sur toute la surface des pièces concernées dans un environnement ambiant, péjorant ainsi le fonctionnement du mécanisme. Un revêtement empêchant l'eau ou un autre liquide de mouiller ces surfaces fonctionnelles permet de corriger le problème.

On peut certes imaginer un fonctionnement sans lubrifiant. Dans ce cas, on empêche l'humidité ambiante de mouiller la surface des pièces traitées. Mais on peut également l'imaginer avec présence d'un produit mouillant, tel qu'huile, graisse, solvant ou eau, ou autre, selon la nature des différents mécanismes incorporés dans la boîte de montre. L'objectif du revêtement hydrophobe est alors de limiter la surface mouillée par ce produit mouillant.

L'invention permet notamment de limiter la perte de rendement lorsque l'humidité relative augmente.

En combinaison avec l'apposition d'un revêtement hydrophobe sur les surfaces de contact des mécanismes, l'ajout d'une rugosité supérieure à la normale permet de limiter la surface réelle de contact, et donc de limiter également l'énergie dissipée lors du décollement des pièces. Toutefois cette rugosité ne peut pas être élevée inconsidérément, en raison des frottements, de la durée de fonctionnement, et donc de l'usure.

L'invention assure la protection contre la présence de produit mouillant au niveau des surfaces de contact d'un composant de mécanisme d'horlogerie en matériau micro-usinable, et plus particulièrement la protection contre la présence de produit mouillant au niveau des surfaces de contact d'un composant d'un résonateur à haut facteur de qualité, ou d'un composant de mécanisme d'échappement agencé pour coopérer avec un tel résonateur à haut facteur de qualité.

L'invention consiste à mettre en œuvre un procédé consistant à déposer un revêtement hydrophobe en surface d'au moins un composant horloger en matériau micro-usinable présentant une propension à l'absorption d'eau, et en particulier en surface des zones de contact de composants au sein de mécanismes, notamment de composants d'un résonateur et/ou d'un mécanisme d'échappement.

Plus particulièrement, l'invention concerne la protection d'un arrêtoir, notamment une ancre, et des composants avec lesquels cet arrêtoir est agencé pour coopérer : mobile d'échappement, notamment roue d'échappement, et masse inertielle du résonateur. Quand l'un de tels composants est constitué en plusieurs parties élémentaires, l'invention concerne aussi la protection des surfaces de contact de ces parties élémentaires, par exemple d'une ancre en deux parties.

Par « composant en matériau micro-usinable », on entend un composant en silicium, ou en silicium oxydé, ou en tout matériau similaire et hydrophile, présentant une propension à l'absorption d'eau, et en particulier en surface des composants du mécanisme d'échappement. De façon générale, le terme de « composant en matériau micro-usinable » s'entend pour tout composant d'horlogerie réalisé selon une des technologies « MEMS » ou « Microelectromechanical systems » c'est-à-dire microsystèmes électromécaniques, « LIGA » ou "Röntgenlithographie, Galvanoformung, Abformung" c'est-à-dire lithographie -galvanisation - formage, ou similaires, utilisées pour réaliser des composants d'horlogerie monobloc et de très haute précision, à un coût de production acceptable.

Du fait des contraintes de fonctionnement des mécanismes horlogers, et tout particulièrement d'un résonateur ou d'un mécanisme d'échappement, ce revêtement hydrophobe doit être résistant à l'abrasion, de manière à garantir le fonctionnement à long terme.

L'accroche de ce revêtement hydrophobe à la surface doit être particulièrement soignée. Ainsi, la surface doit être exempte de toute pollution avant le dépôt. Ce dépôt est de préférence de type monocouche auto-assemblée qu'on appellera aussi ci-après « SAM » ou « self-assembled monolayer » c'est-à-dire monocouche auto-assemblée. Ces revêtements sont connus dans d'autres domaines industriels et le sont uniquement pour leurs propriétés lipophobes et pour protéger des zones ne devant pas être polluées par du lubrifiant, mais ne sont pas utilisées pour leurs propriétés hydrophobes pour les composants en silicium ou similaire.

Les surfaces doivent être parfaitement propres pour assurer la robustesse et la pérennité du dépôt. Ceci peut être réalisé en effectuant le traitement de greffage à la suite de la gravure DRIE ou similaire, dans la même salle blanche ou en nettoyant efficacement les pièces. Différents types de nettoyage peuvent être effectués: dépoussiérage au jet d'azote, nettoyage à l'eau désionisée, nettoyage aux solvants (« opticlear », acétone, alcool isopropylique), désoxydation du silicium (HF/H₂O), nettoyage avec solution dite « piranha » (H₂SO₄/H₂O₂) pour l'enlèvement de résidus de masques ou similaires. Suite à ces procédés , on peut encore utiliser les standards de nettoyage de fabrication des transistors, et connus pour le nettoyage des wafers, tels que le standard « RCA clean », développé par W. Kern pour « RCA Radio Corporation of America », consistant en un procédé chimique à étapes successives : enlèvement des contaminants organiques (H₂O/NH₄OH/H₂O₂), enlèvement des couches minces d'oxydes(HF/H₂O), et nettoyage ionique (H₂O/HCl/H₂O₂), puis rinçage et séchage. Le choix est fait en fonction des contaminations à retirer de la surface et des moyens à disposition.

Le revêtement hydrophobe comporte au moins un type de molécule de fonctionnalisation.

Le revêtement hydrophobe peut être un lubrifiant, apte à être greffé à la surface, tel qu'un lubrifiant perfluoropolyéthers, du type de ceux que l'on utilise pour lubrifier le contact entre la tête de lecture et le disque d'un système de disque dur informatique, connus sous les références commerciales « Z-Dol », « Z-Tetraol », ou encore « Solvay Fomblin ».

D'autres familles de produits visant à rendre la surface hydrophobe sont des avantageusement des alkylsilanes, tels le dichlorodiméthylsilane (DDMS), le perfluorodécyltrichlorosilane (FDTS) ou préférentiellement l'octadécyltrichlorosilane (ODTS ou OTS) CH₃(CH₂)₁₇SiCl₃.

Dans le cas du SAM lubrifiant, les polyperfluoroéthers sont également appelés perfluoropolyalkyléthers. Le brevet US7510999B2 au nom de DENG/HITACHI décrit certains d'entre eux, dans leur application à la lubrification de moyens d'enregistrement magnétiques.

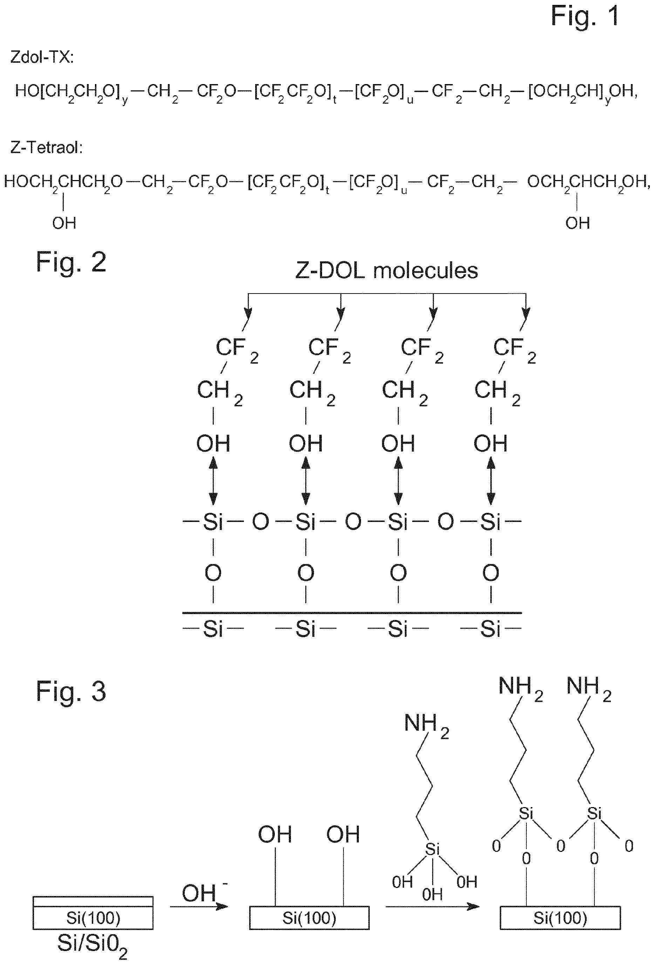

La figure 1 donne un exemple de la structure d'un tel polyperfluoroéther.

La préparation de surface consiste à adapter la rugosité du composant, l'épaisseur minimale de sa couche superficielle éventuelle d'oxyde, notamment dans le cas d'un composant en silicium de la couche de SiO₂, et la préparation particulière éventuelle. La rugosité peut rester celle résultant de l'opération de gravure DRIE. Il est maintenant possible d'avoir des rugosités nanométriques comme des rugosités micrométriques, selon le type de post-traitement choisi. Quoi qu'il en soit, le dépôt est d'épaisseur nanométrique, et reste conforme à la surface, en en épousant la topographie. Dans le cas particulier du silicium, l'épaisseur de SiO₂ n'est pas fondamentalement importante pour l'application recherchée, étant entendu qu'une couche atomique d'oxyde est suffisante. À l'air libre, des liaisons hydroxyles OH s'y forment, que le SAM va utiliser pour se greffer, par exemple au moyen de ses propres liaisons hydroxyles OH. Quoi qu'il en soit, l'épaisseur de SiO₂ peut varier entre 0.1 nm (oxydation naturelle) et, par exemple, 10 µm (oxydation forcée), selon les besoins horlogers. Pour une application à un mécanisme d'échappement, la couche d'oxyde SiO₂ utilisée d'une épaisseur de l'ordre de 500 nm, procure une bonne tenue et des résultats satisfaisants.

L'application du revêtement hydrophobe comporte une opération dite de « greffage » à la surface. Ce mécanisme de greffage est brièvement explicité ci-dessus, et se base sur les liaisons OH.

En résumé, la surface présente une affinité avec une partie de la molécule à déposer. On parle d'ancrage ou de « head » en anglais. On utilise généralement l'oxygène généralement présent en surface, qui aura réagi avec l'humidité de l'air pour former des groupements hydroxyles OH. La molécule à déposer comportant un groupement ayant une affinité avec ces groupements OH, elle viendra spontanément s'y lier chimiquement. On parle alors d'adsorption. Les molécules sont généralement organisées dans l'espace en fonction de leur morphologie (représentation habituelle de surfaces sur lesquelles il y a des poils moléculaires).

La figure 2 montre une structure en silicium, dont la surface est matérialisée par un trait plein horizontal ; au-delà, s'étend son oxyde SiO₂. La liaison OH de la molécule à déposer (en l'occurrence un SAM dit lubrifiant) est liée à l'atome de silicium en remplacement de la même liaison OH qui s'est développée sur le SiO₂ à l'air ambiant.

La figure 3 illustre la formation de groupements OH à la surface du Si/SiO₂ sur lesquels une molécule avec un ancrage de type silane viendra se greffer. Le reste de la molécule en NH₂ est donné à titre d'exemple. Généralement, on trouve plutôt des atomes de fluor pour abaisser les tensions de surface.

On peut également avoir des molécules avec des ancrages de type groupement silane : ODTS, FDTS et DDMS. Ces derniers ont une affinité naturelle avec le wafer Si/SiO₂, ce qui rend leur greffage plus facile.

Une autre alternative consiste à utiliser des ancrages de type groupements acide bis- ou mono-phosphonique et/ou thiol ainsi que la combinaison des trois (généralement par deux).

Le revêtement hydrophobe s'applique généralement au tremper. Il recouvre donc la totalité de la surface que le mélange peut mouiller. Généralement, la molécule active est dissoute dans un solvant qui lui est propre (alcool ou eau sont deux des solvants communs). Sa concentration est largement suffisante pour que toute la surface soit revêtue dans un temps généralement voulu court. Les molécules déposées, mais non greffées à la surface, peuvent s'éliminer lors d'un rinçage dans un autre bain de même solvant (mais sans molécule active). Ce bain ne peut pas retirer les molécules greffées car elles sont désormais liées chimiquement à la surface.

En alternative, un dépôt sélectif, sur uniquement des zones actives du composant, est possible, mais il nécessite de déposer préalablement au dépôt SAM un autre dépôt que l'on pourra retirer sans retirer le SAM, ce qui complique et renchérit la mise en œuvre du procédé, d'autant plus que le revêtement hydrophobe ne présente pas d'effet négatif quand il recouvre des surfaces non actives.

Le dépôt d'un tel revêtement hydrophobe peut se faire, comme ci-dessus au tremper, mais aussi par voie gazeuse, par exemple via un procédé CVD.

Ainsi, plus particulièrement, l'invention concerne un composant 1 de résonateur 10 à haut facteur de qualité supérieur à 1000, ou de mécanisme d'échappement 20 d'horlogerie agencé pour coopérer avec un tel résonateur 10 à haut facteur de qualité supérieur à 1000.

Ce composant 1 comporte un noyau 2 en matériau micro-usinable, recouvert d'une couche d'oxyde 3 du matériau micro-usinable quand ledit matériau micro-usinable est oxydable.

Le composant 1 comporte, sur ce noyau 2 ou sur cette couche d'oxyde 3 du matériau micro-usinable quand ledit matériau micro-usinable est oxydable, une couche résistante à l'abrasion 5, laquelle comporte au moins une surface de contact 6.

Cette surface de contact 6 est agencée pour coopérer avec une surface de contact antagoniste 7, que comporte au moins un autre composant du résonateur 10, ou du mécanisme d'échappement 20, ou d'un mouvement d'horlogerie 100 incorporant ce résonateur 10 et/ou ce mécanisme d'échappement 20.

Plus particulièrement, toutes les surfaces de contact 6 d'un même mécanisme sont de même nature, et toutes les surfaces antagonistes 7 avec lesquelles coopèrent ces surfaces de contact 6 sont de même nature que ces surfaces de contact 6.

Selon l'invention, cette couche résistante à l'abrasion 5 est une monocouche auto-assemblée hydrophobe de type silane et/ou de type fluorée ou perfluorée ou polyperfluorée.

Selon l'invention, cette monocouche auto-assemblée hydrophobe est agencée pour repousser tout produit mouillant hors de la zone de contact entre la surface de contact 6 et une surface de contact antagoniste 7, de façon à faciliter le décollement entre la surface de contact 6 et une surface de contact antagoniste 7 lorsque le fonctionnement du résonateur 10 ou du mécanisme d'échappement 20 sépare la surface de contact 6 et la surface de contact antagoniste 7.

La couche résistante à l'abrasion 5 a une rugosité supérieure ou égale à 5 nanomètres Ra, et plus particulièrement supérieure ou égale à 9 nanomètres Ra, plus particulièrement encore supérieure ou égale à 25 nanomètres Ra, au moins au niveau d'au moins une surface de contact 6. Plus particulièrement la couche résistante à l'abrasion 5 a une rugosité supérieure ou égale à 5 Ra au niveau de chaque surface de contact 6. Une des deux surfaces en contact doit être lisse de manière à éviter un frottement trop important (interpénétration des rugosités par exemple). La surface rugueuse doit être en déplacement relatif avec une surface lisse de manière à éviter l'usure. La surface de la contrepièce doit de préférence être faible pour limiter l'usure, et sa rugosité est avantageusement inférieure à celle de la surface de contact, et plus particulièrement mais non limitativement inférieure à 5 nanomètres Ra.

L'invention permet ainsi d'éloigner tout produit mouillant de la zone de contact. Une boîte 150 de montre étant étanche, il est avantageux de pouvoir maîtriser la localisation des produits mouillants qu'elle renferme, y compris la condensation lors des changements de température. A cet effet, dans un agencement avantageux, le composant 1 comporte, à distance de toute dite surface de contact 6 et de toute surface de contact antagoniste 7, au moins une surface de recueil de condensat 8 en surface d'une couche hydrophile 9 disposée sur le noyau 2 ou sur la couche d'oxyde 3 du matériau micro-usinable quand le matériau micro-usinable est oxydable, ou sur disposée localement la couche résistante à l'abrasion 5, pour constituer un piège et y attirer tout produit mouillant ou condensat aqueux ou lubrifiant, et l'éloigner des surfaces de contact 6 et surfaces de contact antagonistes 7. On conjugue ainsi une répulsion des produits mouillants hors des zones de contact, et une attraction de ces produits vers des zones où ils ne sont pas nuisibles.

Avantageusement, la surface de recueil de condensat 8 est située au niveau d'une zone massive : zone de fixation 14 à une platine ou un pont, masse inertielle 15 d'un mobile inertiel 13, bras 26 d'une roue d'échappement 24, corps 27 d'une ancre 21, et à distance des chevilles 12, dents 25, ou autres palettes de contact 22, 23.

Dans une réalisation avantageuse sur du SiO₂, la monocouche auto-assemblée hydrophobe comporte de l'octadécyltrichlorosilane CH₃CH₂₁₇SiCl₃.

Plus particulièrement, le composant 1 est un composant de résonateur 10, et comporte au moins une lame flexible 11 droite ou spiralée, qui est agencée pour constituer un moyen de rappel d'un résonateur 10 et dont la surface est celle du noyau 2 ou de la couche d'oxyde 3 du matériau micro-usinable quand le matériau micro-usinable est oxydable.

L'invention concerne encore un résonateur 10 comportant au moins un tel composant 1, et dont les surfaces antagonistes 7 sont de même nature que les surfaces de contact 6.

L'invention concerne encore un mécanisme d'échappement 20 comportant au moins un tel composant 1, et dont les surfaces antagonistes 7 sont de même nature que les surfaces de contact 6.

L'invention concerne encore un mouvement 100 d'horlogerie comportant un tel résonateur 10 et/ou un tel mécanisme d'échappement 20, et dont les surfaces antagonistes 7 sont de même nature que les surfaces de contact 6.

L'invention concerne encore une montre 200 comportant, dans une boîte étanche 150, un tel mouvement 100.

En ce qui concerne la compatibilité avec des lubrifiants horlogers classiques, il convient de souligner au préalable qu'on cherche à éviter un contact entre la tête de la molécule et un éventuel lubrifiant, car le lubrifiant génère intrinsèquement des forces d'adhésion de type capillaires ; cette tête de la molécule est souvent constituée du même type de molécules, généralement fluorées, que celle des épilames connus et utilisés aujourd'hui en horlogerie, et de ce fait il n'y a pas de souci de compatibilité en cas de contact avec les lubrifiants horlogers en l'état actuel des connaissances. Dans le cas des molécules SAM du type ODTS, notamment des alkylsilanes dépourvus de fluor, la tête de la molécule est de type aliphatique, ce qui ne pose non plus aucun souci de compatibilité avec les lubrifiants horlogers en l'état actuel des connaissances.

L'utilisation de certains dépôts de monocouche auto-assemblée «SAM » est connue dans le seul but d'abaisser la tension de surface, pour maintenir un lubrifiant horloger à l'endroit d'un contact à lubrifier, lequel est dépourvu de « SAM ». Le lubrifiant doit donc rester dans la zone de contact pour permettre, via sa viscosité entre autres, de dissiper les effort de cisaillement des deux corps en contact et en déplacement relatif, et à diminuer les pressions de contact. Le lubrifiant fait donc diminuer le coefficient de frottement.

La présente invention est fondamentalement différente, dans le sens où on cherche l'inverse, c'est-à-dire qu'on désire éviter qu'un produit mouillant, ou un liquide, quel qu'il soit, puisse se retrouver au sein du contact, car, dans les systèmes où il y a peu d'énergie, les forces d'adhésion (capillarité) deviennent prépondérantes. En effet, les forces de surface (adhésion) deviennent, pour des petits mécanismes peu énergétiques, plus importantes que les forces de volume (inertie, masse). Ces forces capillaires sont proportionnelles à la tension de surface des liquides considérés, du volume de liquide et de la façon dont ce volume est réparti. Elles ne sont proportionnelles ni à la pression de contact ni à la vitesse relative entre les corps, contrairement aux forces de frottement.

## Revendications

1. Composant (1) de résonateur (10) à haut facteur de qualité supérieur à 1000, ou de mécanisme d'échappement (20) d'horlogerie agencé pour coopérer avec un tel résonateur (10) à haut facteur de qualité supérieur à 1000, ledit composant (1) comportant un noyau (2) en matériau micro-usinable, recouvert d'une couche d'oxyde (3) dudit matériau micro-usinable quand ledit matériau micro-usinable est oxydable, et ledit composant (1) comportant, sur ledit noyau (2) ou sur ladite couche d'oxyde (3) dudit matériau micro-usinable quand ledit matériau micro-usinable est oxydable, une couche résistante à l'abrasion (5) qui comporte au moins une surface de contact (6) agencée pour coopérer avec une surface de contact antagoniste (7) que comporte au moins un autre composant, dénommé la contrepièce, dudit résonateur (10) ou dudit mécanisme d'échappement (20) ou d'un mouvement d'horlogerie (100) incorporant ledit résonateur (10) et/ou ledit mécanisme d'échappement (20), **caractérisé en ce que** ladite couche résistante à l'abrasion (5) est une monocouche auto-assemblée hydrophobe de type silane et/ou de type fluorée ou perfluorée ou polyperfluorée, et et **en ce que** ladite monocouche auto-assemblée hydrophobe est agencée pour repousser tout produit mouillant hors de la zone de contact entre ladite surface de contact (6) et ladite surface de contact antagoniste (7), de façon à faciliter le décollement entre ladite surface de contact (6) et une surface de contact antagoniste (7) lorsque le fonctionnement dudit résonateur (10) ou dudit mécanisme d'échappement (20) sépare ladite surface de contact (6) et ladite surface de contact antagoniste (7), et **en ce que** ladite couche résistante à l'abrasion (5) a une rugosité supérieure ou égale à 5 nanomètres Ra au moins au niveau d'au moins une dite surface de contact (6).

2. Composant (1) selon la revendication 1, **caractérisé en ce que** ladite couche résistante à l'abrasion (5) a une rugosité supérieure ou égale à 5 nanomètres Ra au niveau de chaque dite surface de contact (6).

3. Composant (1) selon la revendication 1 ou 2, **caractérisé en ce que** ledit composant (1) comporte, à distance de toute dite surface de contact (6) et de toute surface de contact antagoniste (7), au moins une surface de recueil de condensat (8) en surface d'une couche hydrophile (9) disposée sur ledit noyau (2) ou sur ladite couche d'oxyde (3) dudit matériau micro-usinable quand ledit matériau micro-usinable est oxydable, ou disposée localement sur ladite couche résistante à l'abrasion (5), pour constituer un piège et y attirer tout produit mouillant ou condensat aqueux ou lubrifiant, et l'éloigner desdites surfaces de contact (6) et surfaces de contact antagonistes (7).

4. Composant (1) selon l'une des revendications 1 à 3, **caractérisé en ce que** ladite monocouche auto-assemblée hydrophobe comporte un alkyltrichlorosilane.

5. Composant (1) selon la revendication 4, **caractérisé en ce que** ladite monocouche auto-assemblée hydrophobe comporte de l'octadécyltrichlorosilane CH₃(CH₂)₁₇SiCl₃.

6. Composant (1) selon l'une des revendications 1 à 5, **caractérisé en ce que** ledit composant (1) est un composant de résonateur (10), et comporte au moins une lame flexible (11) droite ou spiralée agencée pour constituer un moyen de rappel d'un dit résonateur (10) et dont la surface est celle dudit noyau (2) ou de ladite couche d'oxyde (3) dudit matériau micro-usinable quand ledit matériau micro-usinable est oxydable.

7. Résonateur (10) comportant au moins un composant (1) selon l'une des revendications 1 à 6, et dont les dites surfaces antagonistes (7) sont de même nature que lesdites surfaces de contact (6).

8. Résonateur (10) selon la revendication 7, **caractérisé en ce que** ledit résonateur (10) comporte une contrepièce avec une surface de contact antagoniste (7) agencée pour coopérer avec une dite surface de contact (6) d'un dit composant (1), et **en ce que** la surface de ladite contrepièce, avec laquelle coopère ladite couche résistante à l'abrasion (5), a une rugosité inférieure à celle de ladite couche résistante à l'abrasion (5).

9. Résonateur (10) selon la revendication 8, **caractérisé en ce que** la surface de la contrepièce, avec laquelle coopère ladite couche résistante à l'abrasion (5), a une rugosité inférieure à 5 nanomètres Ra.

10. Mécanisme d'échappement (20) comportant au moins un composant (1) selon l'une des revendications 1 à 6, et dont les dites surfaces antagonistes (7) sont de même nature que lesdites surfaces de contact (6).

11. Mouvement d'horlogerie (100) comportant un résonateur (10) selon l'une des revendications 7 à 9, et/ou un mécanisme d'échappement (20) selon la revendication 10, et dont les dites surfaces antagonistes (7) sont de même nature que lesdites surfaces de contact (6).

12. Montre (200) comportant, dans une boîte étanche, au moins un mouvement (100) selon la revendication 11.

## Patentansprüche

1. Komponente (1) für Resonator (10) mit hohem Qualitätsfaktor über 1000 oder für Hemmungsmechanismus (20) eines Zeitmessers, die eingerichtet ist, um mit einem derartigen Resonator (10) mit hohem Qualitätsfaktor über 1000 zusammenzuwirken, wobei die Komponente (1) einen Kern (2) aus mikrobearbeitbarem Material aufweist, der mit einer Oxidschicht (3) des mikrobearbeitbaren Materials bedeckt ist, wenn das mikrobearbeitbare Material oxidierbar ist, und wobei die Komponente (1) auf dem Kern (2) oder auf der Oxidschicht (3) des mikrobearbeitbaren Materials, wenn das mikrobearbeitbare Material oxidierbar ist, eine abriebfeste Schicht (5) aufweist, die mindestens eine Kontaktfläche (6) aufweist, die eingerichtet ist, um mit einer antagonistischen Kontaktfläche (7) zusammenzuwirken, welche mindestens eine andere Komponente, bezeichnet als Gegenstück, des Resonators (10) oder des Hemmungsmechanismus (20) oder eines Uhrwerks (100), aufweist, das den Resonator (10) und/oder den Hemmungsmechanismus (20) einschließt, **dadurch gekennzeichnet, dass** die abriebfeste Schicht (5) eine hydrophobe selbstgebildete Monoschicht vom Silantyp und/oder vom Fluorid- oder Perfluorid- oder Polyperfluoridtyp ist und dass die hydrophobe selbstgebildete Monoschicht eingerichtet ist, um jedes benetzende Produkt aus der Kontaktzone zwischen der Kontaktfläche (6) und der antagonistischen Kontaktfläche (7) abzuweisen, so dass das Lösen zwischen der Kontaktfläche (6) und einer antagonistischen Kontaktfläche (7) erleichtert ist, wenn durch die Arbeit des Resonators (10) oder des Hemmungsmechanismus (20) die Kontaktfläche (6) von der antagonistischen Kontaktfläche (7) getrennt wird und dass die abriebfeste Schicht (5) eine Rauigkeit von über oder gleich 5 Nanometer Ra mindestens im Bereich von mindestens einer Kontaktfläche (6) hat.

2. Komponente (1) nach Anspruch 1, **dadurch gekennzeichnet, dass** die abriebfeste Schicht (5) eine Rauigkeit von über oder gleich 5 Nanometer Ra im Bereich jeder Kontaktfläche (6) hat.

3. Komponente (1) nach Anspruch 1 oder 2, **dadurch gekennzeichnet, dass** die Komponente (1) beabstandet von jeder Kontaktfläche (6) und von jeder antagonistischen Kontaktfläche (7) mindestens eine Kondensatsammelfläche (8) auf der Oberfläche einer hydrophilen Schicht (9) aufweist, die auf dem Kern (2) oder auf der Oxidschicht (3) des mikrobearbeitbaren Materials angeordnet ist, wenn das mikrobearbeitbare Material oxidierbar ist, oder lokal auf der abriebfesten Schicht (5) angeordnet ist, um eine Falle zu bilden und dort jedes benetzende Produkt oder wässrige Kondensat oder Schmiermittel anzuziehen und es von den Kontaktflächen (6) und antagonistischen Kontaktflächen (7) zu entfernen.

4. Komponente (1) nach einem der Ansprüche 1 bis 3, **dadurch gekennzeichnet, dass** die hydrophobe selbstgebildete Monoschicht ein Alkyltrichlorsilan aufweist.

5. Komponente (1) nach Anspruch 4, **dadurch gekennzeichnet, dass** die hydrophobe selbstgebildete Monoschicht Octadecyltrichlorsilan CH₃(CH₂)₁₇SiCl₃ aufweist.

6. Komponente (1) nach einem der Ansprüche 1 bis 5, **dadurch gekennzeichnet, dass** die Komponente (1) eine Komponente eines Resonators (10) ist und mindestens eine gerade oder spiralige flexible Lamelle (11) aufweist, die eingerichtet ist, um ein Rückstellmittel eines Resonators (10) zu bilden und deren Oberfläche die des Kerns (2) oder der Oxidschicht (3) des mikrobearbeitbaren Materials ist, wenn das mikrobearbeitbare Material oxidierbar ist.

7. Resonator (10), der mindestens eine Komponente (1) nach einem der Ansprüche 1 bis 6 aufweist und deren antagonistische Flächen (7) in derselben Art wie die Kontaktflächen (6) sind.

8. Resonator (10) nach Anspruch 7, **dadurch gekennzeichnet, dass** der Resonator (10) ein Gegenstück mit einer antagonistischen Kontaktfläche (7) aufweist, die eingerichtet ist, um mit einer Kontaktfläche (6) einer Komponente (1) zusammenzuwirken und dass die Oberfläche des Gegenstücks, mit der die abriebfeste Schicht (5) zusammenwirkt, eine Rauigkeit aufweist, die kleiner als die der abriebfesten Schicht (5) ist.

9. Resonator (10) nach Anspruch 8, **dadurch gekennzeichnet, dass** die Oberfläche des Gegenstücks, mit der die abriebfeste Schicht (5) zusammenwirkt, eine Rauigkeit von unter 5 Nanometer Ra hat.

10. Hemmungsmechanismus (20), der mindestens eine Komponente (1) nach einem der Ansprüche 1 bis 6 aufweist und deren antagonistische Flächen (7) in derselben Art wie die Kontaktflächen (6) sind.

11. Uhrwerk (100), das einen Resonator (10) nach einem der Ansprüche 7 bis 9 und/oder einen Hemmungsmechanismus (20) nach Anspruch 10 aufweist und deren antagonistische Flächen (7) in derselben Art wie die Kontaktflächen (6) sind.

12. Uhr (200), die in einem dichten Gehäuse mindestens ein Uhrwerk (100) nach Anspruch 11 aufweist.

## Claims

1. Component (1) for a resonator (10) with a high quality factor of more than 1000, or for a timepiece escapement mechanism (20) arranged to cooperate with such a resonator (10) with a high quality factor of more than 1000, said component (1) including a core (2) made of micromachinable material, coated with an oxide layer (3) of said micromachinable material when said micromachinable material is oxidizable, and said component (1) comprising, on said core (2) or on said oxide layer (3) of said micromachinable material when said micromachinable material is oxidizable, an abrasion resistant layer (5) which comprises at least one contact surface (6) arranged to cooperate with an opposing contact surface (7) that comprises at least one other component, called the counterpart, of said resonator (10) or of said escapement mechanism (20) or of a timepiece movement (100) incorporating said resonator (10) and/or said escapement mechanism (20), **characterised in that** said abrasion resistant layer (5) is a hydrophobic self-assembled monolayer of the silane and/or fluorinated or perfluorinated or polyperfluorinated type, and **in that** said hydrophobic self-assembled monolayer is arranged to repel any wetting agent from the contact area between said contact surface (6) and said opposing contact surface (7), to facilitate detachment between said contact surface (6) and an opposing contact surface (7) when the operation of said resonator (10) or of said escapement mechanism (20) separates said contact surface (6) and said opposing contact surface (7), and **in that** said abrasion resistant layer (5) has a roughness greater than or equal to 5 nanometres Ra at least on at least one said contact surface (6).

2. Component (1) according to claim 1, **characterised in that** said abrasion resistant layer (5) has a roughness greater than or equal to 5 nanometres Ra on each said contact surface (6).

3. Component (1) according to claim 1 or 2, **characterised in that** said component (1) comprises, remote from every said contact surface (6) and from every said opposing contact surface (7), at least one condensate collection surface (8) on the surface of a hydrophilic layer (9) arranged on said core (2) or on said oxide layer (3) of said micromachinable material when said micromachinable material is oxidizable, or arranged locally on said abrasion resistant layer (5), to form a trap to attract any wetting agent or aqueous condensate or lubricant and move it away from said contact surfaces (6) and opposing contact surfaces (7).

4. Component (1) according to one of claims 1 to 3, **characterised in that** said hydrophobic self-assembled monolayer comprises an alkyltrichlorosilane.

5. Component (1) according to claim 4, **characterised in that** said hydrophobic self-assembled monolayer comprises octadecyltrichlorosilane CH₃(CH₂)₁₇SiCl₃.

6. Component (1) according to one of claims 1 to 5, **characterised in that** said component (1) is a resonator (10) component and comprises at least one straight or spiral flexible strip (11) arranged to form a return means for a said resonator (10) and whose surface is that of said core (2) or of said oxide layer (3) of said micromachinable material when said micromachinable material is oxidizable.

7. Resonator (10) including at least one component (1) according to one of claims 1 to 6, and whose said opposing surfaces (7) are of the same nature as said contact surfaces (6).

8. Resonator (10) according to claim 7, **characterised in that** said resonator (10) comprises a counterpart with an opposing contact surface (7) arranged to cooperate with a said contact surface (6) of a said component (1), and **in that** the surface of said counterpart, with which said abrasion resistant layer (5) cooperates, has a lower roughness than that of said abrasion resistant layer (5).

9. Resonator (10) according to claim 8, **characterised in that** the surface of the counterpart, with which said abrasion resistant layer (5) cooperates, has a roughness lower than 5 nanometres Ra.

10. Escapement mechanism (20) including at least one component (1) according to one of claims 1 to 6, and whose said opposing surfaces (7) are of the same nature as said contact surfaces (6).

11. Timepiece movement (100) including a resonator (10) according to one of claims 7 to 9, and/or an escapement mechanism (20) according to claim 10, and whose said opposing surfaces (7) are of the same nature as said contact surfaces (6).

12. Watch (200) including, in a sealed case, at least one movement according to claim 11.
